# EUROPEAN PATENT APPLICATION

(11) **EP 4 686 004 A1**
(43) Date of publication of application: **28.01.2026**
(21) Application number: 24190544.7
(22) Date of filing: 24.07.2024
(51) Int. Cl.: H01R 4/64, H01R 13/73, B60R 16/02, H01R 9/05, H01R 13/6596, H01R 13/52

(54) **A CONNECTOR ASSEMBLY**

(71) Applicant: Aptiv Technologies AG, 8200 Schaffhausen (CH)
(72) Inventor: MORIN, Laurent, 78120 Rambouillet (FR); PORTIER, Vincent, 28110 Lucé (FR)
(74) Representative: INNOV-GROUP

(57) **Abstract**

The connector assembly comprises a connector and a counter-connector (42). The counter-connector (42) has an insert (80) made of electrically conductive material which passes through its outer housing (62). The insert (80) comprises :
- a head in direct mechanical and electrical contact with a shield (64) of the counter-connector (62), and
- a tail which is apparent on an outer face (72) of the outer housing (62) of the counter-connector, this tail comprising one part of a fastening system that allow to rigidly secure the counter-connector to an electrically conductive frame of an automotive vehicle.

## Description

The invention relates to a connector assembly and a counter-connector as well as an automotive vehicle comprising such a connector assembly.

Connector assemblies are use for automotive application and, in particular, in hybrid or electric automotive vehicles.

A known connector assembly is disclosed in application EP4372930A1. This known connector assembly comprises a connector in which an end of a shielded cable is mounted and a counter-connector in which an end of another cable is mounted. The connector comprises an electrically conductive plate that electrically connects the braid of the shielded cable to a grounding cable. To obtain good electromagnetic compatibility, the grounding cable is connected to the ground of the vehicle such as its metallic frame.

However, it is still desirable to improve the electromagnetic compatibility of such a connector assembly.

Accordingly, the invention aims at proposing a connector assembly with an improve electromagnetic compatibility.

The invention is exposed in the enclosed set of claims.

The present invention will now be described, by way of example, with reference to the accompanying drawings, in which:
- Figure 1 is a schematic view of a vehicle with a perspective view of a connector assembly of this vehicle,
- Figure 2 is a perspective view of a shielded cable of the connector assembly of figure 1,
- Figure 3 is a perspective view of a counter-connector of the assembly of figure 1
- Figure 4 is a longitudinal and vertical cross-section of the counter-connector of figure 3,
- Figure 5 is an enlarged view of a part of the cross-section of figure 3,
- Figure 6 est a perspective view of an insert of the counter-connector of figure 3.
- Figure 7 is a schematic vertical cross-section of the insert of figure 5,
- Figure 8 is a cross-section of a counter-connector similar to the counter-connector of of figure 3 but with shielded cables,
- Figure 9 is an enlarged view of a part of the cross-section of figure 8, and
- Figure 10 is a schematic vertical cross-section of another embodiment of the insert of figure 6.

In this specification, the terminology, conventions and definitions of the terms used in this text are introduced in Chapter I. Then, detailed examples of embodiments are described in Chapter II with reference to the figures. In Chapter III, variants of these embodiments are presented. Finally, the advantages of the various embodiments are described in Chapter IV.

### Chapter I : Definitions, terminologies and conventions :

In the figures, the same reference is used to designate the same element in each figure.

The figures are oriented with respect to an orthogonal XYZ coordinate system, where the X and Y directions are horizontal and the Z direction is vertical. Terms such as "above", "below", "top", "bottom", "upper", "lower" are defined in relation to the Z direction. Terms "right" and "left" are defined relative to direction X.

In the following detailed description, numerous specific details are set forth in order to provide a thorough understanding of the various described embodiments. However, it will be apparent to one of ordinary skill in the art that the various described embodiments may be practiced without all of these specific details. In other instances, well-known methods, procedures, components, circuits, and networks have not been described in detail so as not to unnecessarily obscure aspects of the embodiments.

An electrically conductive material is a material whose electrical conductivity at 20°C is greater than 10⁴ S/m or 10⁶ S/m.

An electrically insulating material is one whose electrical conductivity, at 20°C, is less than 10⁻¹⁰ S/m or 10⁻¹⁴ S/m.

A high DC voltage is a DC voltage greater than 100 Vdc or 500 Vdc. Generally, a high DC voltage is a voltage that is smaller than 5000 Vdc or 2000 Vdc.

A high DC current is a DC current greater than 10 A or 20 A. Generally, a high DC current is smaller than 500 A or 100 A.

High power electrical connector, such as those used in electrical vehicles, may be required to conduct 90 kilowatts or more of electrical power.

The expression "an element made of material A" or the expression "an element in material A" means that material A represents 90% or 95% of the mass of this element.

In this document, the term "counter-connector" generally and broadly designates any element intended to be electrically connected to a connector. It can therefore be another connector, a housing on which connection components are assembled, a wall through which an electrical connection must be made, etc.

### Chapter II : Examples of embodiments

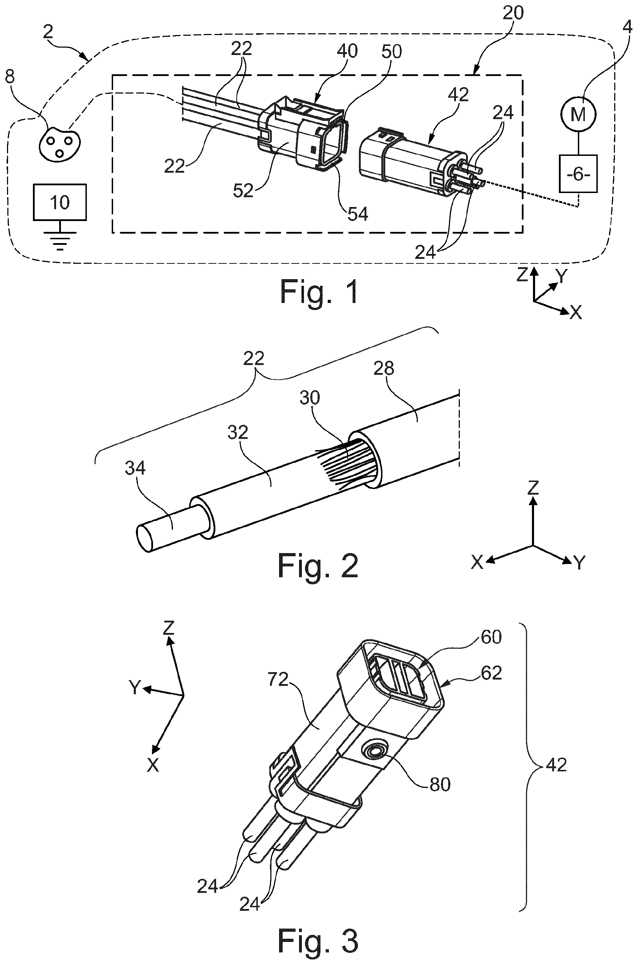

Figure 1 shows a motor vehicle 2, such as an electric vehicle or a plug-in hybrid vehicle. Vehicle 2 comprises
- an electric motor 4,
- a battery 6 that supplies the motor 4 with electricity,
- a plug 8 for recharging the battery 6 from a recharging station, and
- a frame 10 made of electrically conductive material.

Frame 10 is made of metal. The various equipments of vehicle 2, such as engine 4 and battery 6, are secured to it without any degree of freedom. Frame 10 forms the electrical ground of vehicle 2.

Plug 8 is electrically connected to battery 6 via electrical cables. For this purpose, the electrical cables are suitable for carrying a high DC current. On one part of their path inside vehicle 2, the electric cables are shielded, while on another part of their path inside vehicle 2, the electric cables are unshielded. To this end, vehicle 2 comprises a connector assembly 20.

To simplify Figure 1, the electrical cable path between socket 8 and assembly 20 and the electrical cable path between assembly 20 and battery 6 are shown as dotted lines.

In this embodiment, assembly 20 enables each end of the shielded cables to be electrically connected to a respective end of an unshielded cable. In addition, assembly 20 is used to electrically connect the shields of the shielded cables to frame 10.

Figure 1 is shown in the particular case where there are four shielded cables and four unshielded cables. In Figure 1, each shielded cable is designated by the numerical reference 22 and each unshielded cable is designated by the numerical reference 24.

Figure 2 shows a tip of a cable 22 that extends along the X direction. Cable 22 comprises, from the exterior to the interior of the cable, an outer insulative sheath 28, a braid 30, an inner insulative sheath 32 and an electrical conductor 34. The insulative sheaths 28 and 32 are made in electrically insulating material. Braid 30 and conductor 34 are made in an electrically conductive material. Braid 30 forms, in use, an electromagnetic shield. Conductor 34 is for example made of copper or any other conductive material .

Cable 24 is identical to cable 22 except that braid 30 is omitted so that insulative sheath 28 and insulative sheath 32 form a single block of insulative material.

Assembly 20 comprises a connector 40 and a counter-connector 42. The ends of the cables 22 are secured, without any degree of freedom, to connector 40 and the ends of the cables 24 are secured, without any degree of freedom, to counter-connector 42.

Counter-connector 42 is fixed, without any degree of freedom, to frame 10. Connector 40 is reversibly movable between an assembled state and a disassembled state. In the assembled state, connector 40 and counter-connector 42 are fitted into each other, and the ends of the conductors 34 of cables 22 are electrically connected to the corresponding ends of the conductors of the cables 24. In addition, in the assembled state, assembly 20 is dust- and water-tight. For example, in the assembled state, assembly 20 is IP69. In the disassembled state, shown in Figure 1, connector 40 is mechanically and electrically separated and isolated from counter-connector 42.

Connector 40 comprises an inner housing 50, an outer housing 52 and a shield 54. Inner housing 50 and outer housing 52 are made of an electrically insulating material such as plastic. Shield 54 is made of electrically conductive material. These housings 50, 52 are manufactured by molding.

Housing 50 has a cavity for each cable 22. Each of these cavities receives one end of a respective cable 22. Each end of a cable 22 is mounted, without any degree of freedom, inside one of these cavities.

Housing 52 surrounds housing 50 and forms the outer face of connector 40.

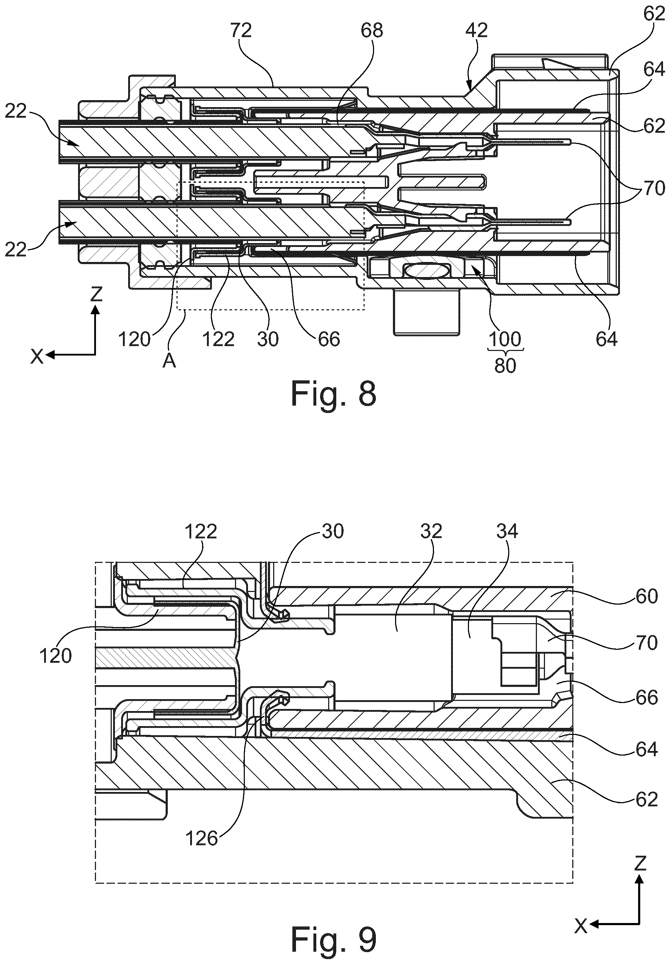

Shield 54 completely surrounds the cavities of housing 50 to attenuate electromagnetic emissions from the stripped ends of cables 22. This shield 54 is electrically connected to braid 30 of each of the cables 22, for example, in a similar way to what is described with reference to Figures 8 and 9 in the particular case of counter-connector 42.

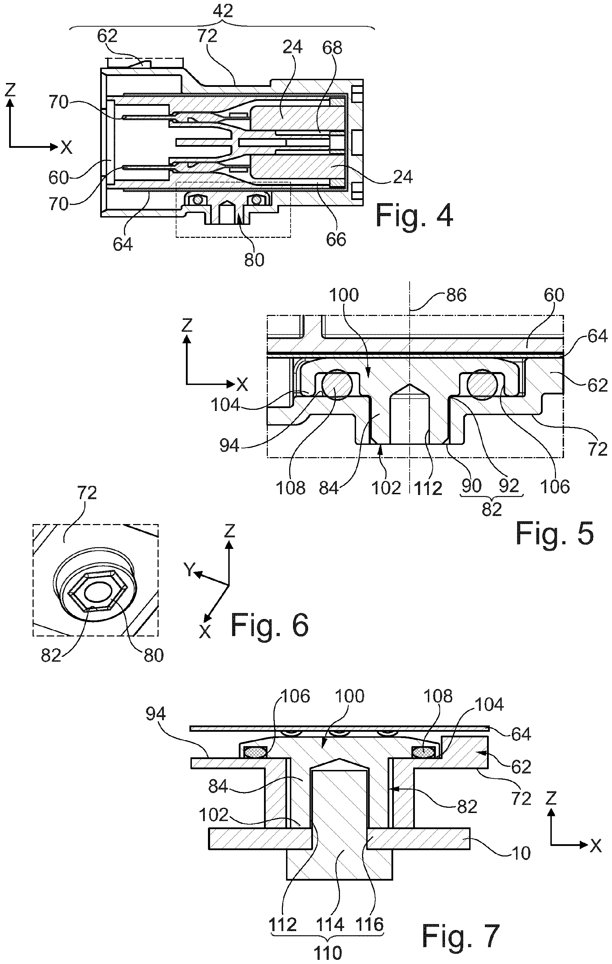

Figures 3 and 4 show counter-connector 42 in more detail. Counter-connector 42 also comprises an inner housing 60, an outer housing 62 and a shield 64 located between the housings 60 and 62.

Inner housing 60 and outer housing 62 are made of electrically insulating material such as plastic. Shield 64 is made of electrically conductive material. These housings 60, 62 are manufactured by molding.

In a similar way to connector 40, inner housing 60 has a cavity for each cable 24. Here, only two cavities 66 and 68 are visible in the partial cross-sectional view of Figure 4, each of which accommodates a respective end of one of the cables 24. More precisely, the end of each cable 24 is stripped to expose conductor 34, and a terminal 70 is attached to the exposed conductor. Two terminals 70 are visible in Figure 4. Typically, terminal 70 is crimped onto the exposed end of conductor 34. For example, terminal 70 is an electrical lug made of an electrically conductive material such as copper or an aluminum alloy.

Housing 62 surrounds housing 60 and comprises an outer face 72. Outer face 72 is directly accessible from the outside of counter-connector 42.

Shield 64 completely surrounds the cavities of housing 60 to attenuate electromagnetic emissions from the stripped ends of the cables 24. Here, shield 64 is mechanically clamped between inner housing 60 on one side and outer housing 62 on the other side.

In this embodiment, shield 64 is not electrically connected to the braid of the cables 24, as the cables 24 are devoid of such a shield. However, in the assembled state, shield 64 is in direct mechanical and electrical contact with shield 54 of connector 40. Thus, in the assembled state, shield 64 is electrically connected to the shields of each of the cables 22.

Counter-connector 42 also includes an insert 80, made of electrically conductive material, for electrically connecting shield 64 to the vehicle's ground and thus here to frame 10. Insert 80 is made of metal.

Insert 80 is shown in greater detail in Figures 5 to 7.

Insert 80 passes through outer housing 62. For this purpose, outer housing 62 has a passage 82 designed to receive a trunk 84 of insert 80. Passage 82 is a cylindrical passage whose directrix curve is a hexagon and whose generatrix is parallel to a straight axis 86. Axis 86 is perpendicular to the wall of outer housing 62 in which passage 82 is arranged.

Passage 82 has an opening 90 which opens onto outer face 72 and an opening 92 which opens directly onto shield 64. These openings 90 and 92 are each located at a respective end of passage 82.

In outer housing 62, opening 92 is bordered by a flat rim 94 which completely surrounds opening 92. Rim 94 extends in a plane perpendicular to axis 86.

Trunk 84 of insert 80 is also a cylinder whose shape is capable, by cooperation of shape with passage 82, of blocking the rotation of insert 80 inside passage 82. To this end, in this embodiment, the directrix curve of trunk 84 is also a hexagon, but its dimensions are slightly smaller than the hexagon of passage 82, to enable trunk 84 to be inserted inside passage 82.

On either side of trunk 84, insert 80 comprises a head 100 and a tail 102. Head 100 and tail 102 form a single block of material with trunk 84.

Head 100 projects beyond opening 92 towards the inside of outer housing 62. Head 100 is in direct mechanical and electrical contact with the portion of shield 64 facing opening 92. To ensure good electrical contact between head 100 and shield 64, the face of head 100 that bears directly on shield 64 is flat and its surface area is greater than the surface area of opening 92.

Head 100 comprises a shoulder 104 which, facing rim 94, extends around opening 92 in a plane perpendicular to axis 86. Shoulder 104 runs all the way around opening 92. A circular groove 106 is cut into shoulder 104 to receive an O-ring seal 108. In its mounted position, shown in Figures 5 and 7, a portion of shoulder 104 rests directly against rim 94. The depth of groove 106 is adjusted so that, in the mounted position, compression of O-ring seal 108 against rim 94 ensures a watertight seal between insert 80 and passage 82.

Tail 102 is intended to come into direct mechanical and electrical contact with frame 10 when counter-connector 42 is fixed to frame 10. For this purpose, tail 102 is visible on the outer face 72 and therefore accessible from the outside of outer housing 62. Here, tail 102 is flushed with opening 90 or protrudes slightly outwards from opening 90.

In addition, tail 102 comprises a part of a system 110 for fastening counter-connector 42 to frame 10. System 110 is reversibly movable between a fixed state, shown in Figure 7, and a free state. In the fixed state, system 110 secures counter-connector 42 to frame 10 without any degree of freedom. Conversely, in the free state, counter-connector 42 and frame 10 are mechanically independent of each other.

Here, system 110 is a screw-nut system. System 110 therefore comprises a threaded hole 112, a screw 114 and a through hole 116 in frame 10. Threaded hole 112 is arranged in tail 102. When screw 114, which passes through hole 116, is screwed into hole 112, it presses tail 102 against frame 10. This ensures robust mechanical and electrical contact between tail 102 and frame 10 in the fixed state. The braid 30 of cables 22 and shields 54 and 64 are then electrically connected to frame 10 via insert 80.

Figures 8 and 9 show counter-connector 42 in the particular case where the positions of cables 22 and 24 are interchanged. In this case, the ends of the cables 24 are directly secured in connector 40 and the ends of the cables 22 are directly secured in counter-connector 42. In this case, shield 64 is electrically connected to the braids 30 of the cables 22. For this purpose, the sheath 28 is removed over a greater length than that over which the sheath 32 is removed, so as to create a zone in the cable 22 in which braid 30 is exposed while the conductor 34 is still encased inside sheath 32. Unlike the previous embodiment, counter-connector 42 comprises a ferrule 120 and a counter-ferrule 122. Ferrule 120 and counter-ferrule 122 are more easily discernible in the enlarged portion of Figure 9. The portion of counter-connector 42 shown in Figure 9 corresponds to portion A of Figure 8, delimited by a dashed rectangle.

Ferrule 120 is fitted over sheath 28. The exposed part of braid 30 is folded over this ferrule 120. Counter-ferrule 122 is pressed onto ferrule 120. In this way, counter-ferrule 122 surrounds and clamps the folded part of braid 30. Shield 64 has an inwardly folded end 126 (Fig. 9) which makes direct mechanical and electrical contact with counter-ferrule 122 to electrically connect braid 30 to shield 64.

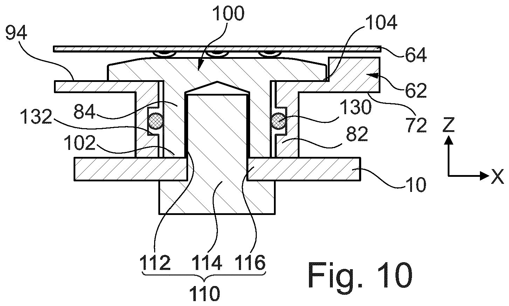

Figure 10 shows another embodiment of counter-connector 42 in which seal 108 is replaced by a seal 130 housed within a groove 132. Groove 132 is cut into passage 82 and turn around trunk 80. Groove 132 extends in a plan perpendicular to axis 86. For example, seal 130 is a O-ring seal. In this embodiment, seal 108 and groove 106 are omitted. This embodiment is particularly well suited for the case where, in addition, the cross-section of passage 82 and trunk 84 are circular.

### Chapter III : Variants of the previous embodiments :

The cross-section of trunk 84 may be different from a hexagon. For example, the cross-section of trunk 84 is square. In this case, typically, the cross-section of passage 82 is also adapted to match the cross-section of trunk 84. So, when the cross-section of trunk 84 is square, the cross-section of passage 82 is also square.

Alternatively, groove 106 in shoulder 104 is omitted. In this case, seal 108 is replaced, for example, by a seal with a rectangular cross-section.

Other versions of the fastening system 110 are also possible. For example, in one variant, the screw-nut system is replaced by a clip system in which tail 102 comprises elastically deformable tongues which clip insert 80 into the hole 116 of frame 10. In another variant, system 110 comprises a screw, which forms a single block of material with tail 102 and passes through hole 116 in the mounted position. In this case, on the other side of hole 116, system 110 comprises a nut for securing counter-connector 42 to frame 10.

The number of electrical cables fitted in the connector and the counter-connector can be equal to one, two or three or be greater than four.

Assembly 20 can be used in applications other than electric or hybrid vehicles. For example, assembly 20 can also be used in the railway or industrial sectors.

### Chapter IV : Advantages of the disclosed embodiments :

The fact that shield 64 of the counter-connector 42 is electrically connected to frame 10 via insert 80 limits electromagnetic emissions compared with the case where shield 64 is connected to frame 10 via an unshielded ground cable. In addition, since insert 80 also includes a part of fastening system 110, the same insert 80 is used to mechanically secure counter-connector 42 to frame 10.

The fact that counter-connector 42 has a seal 108 interposed between outer housing 62 and insert 80 ensures that counter-connector 42 is dust- and water-tight in the assembled state.

The fact that seal 108 is interposed between shoulder 104 and rim 94 ensures that counter-connector 42 is dust- and water-tight in the assembled state even if passage 82 and trunk 84 have respective cross-section which are not circular.

The fact that the face of head 100 is flat improves the electrical contact between insert 80 and shield 64.

## Claims

1. A connector assembly comprising :
- a first cable (22) having :
• an outer sheath (28),
• an inner sheath (32), both outer and inner sheath being made of electrically insulating material,
• an electrically conducting cable braid (30) inserted between the outer sheath and the inner sheath, and
• an first electrical conductor (34) housed in the inner sheath,
- a second cable having :
• an outer sheath made of electrically insulating material, and
• a second electrical conductor housed in the outer sheath,
- a connector (40) in which an end of the first cable is secured and a counter-connector (42) in which an end of the second cable is secured, the connector being mechanically movable between :
• an assembled state in which the first and second electrical conductors are electrically connected, and
• a disassembled state in which the first and second electrical conductors are mechanically and electrically insulated from each other,
wherein :
- the connector (40) comprises :
• an inner housing (52) made of insulating material, this inner housing comprising one cavity which receives the end of the first cable, and
• a shield (54) which surrounds the cavity of the inner housing, this shield being electrically connected to the braid of the first cable received inside the cavity,
- the counter-connector (42) comprises :
• an inner housing (60) made of electrically insulating material, this inner housing comprising a cavity (66, 68) which receives the end of the second cable,
• an outer housing (62) which surrounds the inner housing, this outer housing comprising an outer face (72) directly accessible from outside the counter-connector,
• a shield (64), located between the inner housing and the outer housing, which surrounds the cavity of the inner housing, this shield being electrically connected to the shield of the connector when the connector is in the assembled state,
**characterized in that** the counter-connector (42) has an insert (80) made of electrically conductive material which passes through its outer housing, the insert (80) comprising :
- a head (100) in direct mechanical and electrical contact with the shield (64) of the counter-connector, and
- a tail (102) which is apparent on the outer face (72) of the outer housing of the counter-connector, this tail comprising one part (112) of a fastening system that allow to rigidly secure the counter-connector to an electrically conductive frame of an automotive vehicle.

2. Assembly according to claim 1, in which the second cable (24) is an unshielded cable.

3. Counter-connector for making an assembly in accordance with any of the preceding claims, the counter-connector comprising :
• an inner housing (60) made of electrically insulating material, this inner housing comprising a cavity (66, 68) configured to receive the end of the second cable,
• an outer housing (62) which surrounds the inner housing, this outer housing comprising an outer face (72) directly accessible from outside the counter-connector,
• a shield (64), located between the inner housing and the outer housing, which surrounds the cavity of the inner housing, this shield being configured to be electrically connected to the shield of the connector when the connector is in the assembled state,
**characterized in that** the counter-connector (42) has an insert (80) made of electrically conductive material which passes through its outer housing, the insert (80) comprising :
- a head (100) in direct mechanical and electrical contact with the shield (64) of the counter-connector, and
- a tail (102) which is apparent on the outer face (72) of outer housing (62) of the counter-connector, this tail comprising one part (112) of a fastening system that allow to rigidly secure the counter-connector to an electrically conductive frame of an automotive vehicle.

4. Counter-connector according to claim 3, wherein the counter-connector comprises a seal (108; 130) interposed between the insert (80) and the outer housing (62) to obtain a watertight seal between the insert and the outer housing.

5. Counter-connector according to claim 4, wherein :
- the outer housing (64) comprises :
- a passage (82) with a first opening (90) leading to the outside and a second opening (92) directly facing the shield (64) of the counter-connector, and
- a flat rim (94) which completely surrounds the second opening,
- the head (100) of the insert has a shoulder (104) which extends, parallel to the flat rim (94), along the entire periphery of the second opening, and
- the seal (108) is interposed between the shoulder (104) and the flat rim (94).

6. Counter-connector according to claim 4, wherein :
- the outer housing (64) comprises a passage (82) with a first opening (90) leading to the outside and a second opening (92) directly facing the shield (64) of the counter-connector, the passage being a cylinder,
- the insert (80) comprises a cylindrical trunk (84) which is received inside the passage (82), and
- the seal (130) is interposed between the trunk and the passage.

7. Counter-connector according to anyone of claims 3 to 5, wherein :
- passage (82) is a cylinder whose directrix curve is different from a circle, and
- between its head (100) and its tail (102), the insert comprises a trunk (84) received inside the passage (82), this trunk being a cylinder whose shape is able, by cooperation of shape with the passage, to block the rotation of the insert inside the passage.

8. Counter-connector according to Claim 5 or 6, wherein the face of the head (100) that bears directly on the shield (64) of the counter-connector is flat and its surface area is greater than the surface area of the second opening (92).

9. Counter-connector according to anyone of Claims 3 to 8, wherein the part (112) of the fastening system which is comprised in the tail (102), is a threaded hole able to receive a screw for fixing the counter-connector to the electrically conductive frame.

10. Automotive vehicle, **characterized in that** the vehicle comprises a connector assembly according to Claim 1 or 2.
